# EUROPEAN PATENT SPECIFICATION

(11) **EP 3 670 006 B1**
(45) Date of publication and mention of the grant of the patent: **02.06.2021**
(21) Application number: 18465646.0
(22) Date of filing: 21.12.2018
(51) Int. Cl.: B06B 1/06, B60G 11/27, B60G 17/019

(54) **ULTRASONIC TRANSDUCER DEVICE, AIR SUSPENSION DEVICE COMPRISING AN ULTRASONIC TRANSDUCER DEVICE AND METHOD FOR CONTROLLING AN ULTRASONIC TRANSDUCER DEVICE**
ULTRASCHALLWANDLERVORRICHTUNG, LUFTFEDERVORRICHTUNG MIT EINER ULTRASCHALLWANDLERVORRICHTUNG UND VERFAHREN ZUR STEUERUNG EINER ULTRASCHALLWANDLERVORRICHTUNG
DISPOSITIF TRANSDUCTEUR À ULTRASONS, DISPOSITIF DE SUSPENSION PNEUMATIQUE COMPRENANT UN DISPOSITIF TRANSDUCTEUR À ULTRASONS ET PROCÉDÉ POUR COMMANDER UN DISPOSITIF TRANSDUCTEUR À ULTRASONS

(43) Date of publication of application: 24.06.2020
(73) Proprietor: Continental Automotive GmbH, 30165 Hannover (DE)
(72) Inventor: Dulf, Andrei, 307285 Mosnita Noua (RO); Wokan, Andreas, 61352 Bad Homburg (DE)
(74) Representative: Continental Corporation

(56) References cited:
- US-A- 3 871 395
- US-A- 5 936 161
- US-B1- 6 710 302
- US-B2- 8 059 490

## Description

The invention is concerned with an ultrasonic transducer device, an air suspension device comprising an ultrasonic transducer device and a method for controlling an ultrasonic transducer device.

Ultrasonic ranging is one of the common techniques to determine the distance to an object. Ultrasonic ranging is based on the time of flight method wherein the distance is calculated based on the time of flight between a transmission and a reception of a sound wave and the speed of sound of the sound wave. To determine the time of flight, an ultrasonic transducer device sends the sound wave in a predefined direction to the object. The sound wave is reflected by the object. The reflected sound wave is detected by the ultrasonic transducer device. Ultrasonic transducer devices comprise piezoelectric elements for sending and receiving the ultrasonic waves. To avoid an affection of electronic devices by vibrations originating from excitations of the piezoelectric element, the piezoelectric element is usually damped by a damping element placed between the piezoelectric element and a carrier element. Damping elements are usually made of elastomeric compounds. Damping properties of elastomeric compounds depend on a temperature of the compound. Depending on environmental conditions of the use case, elastomeric compounds with specific working temperature ranges have to be selected. The range of a working temperature range of an elastomeric compound may be too narrow for certain use cases. This may limit the performance of the ultrasonic transducer devices. Document US 8 059 490 B2 discloses an ultrasonic sensor comprising a transducer pot having a floor formed as a diaphragm and a heating element for heating the diaphragm, wherein the heating element is integrated into the diaphragm. In an embodiment, the ultrasonic sensor further comprises a temperature measurement unit for measuring a temperature of the ultrasonic sensor.

It is an object of the present invention to broaden the working temperature range of an ultrasonic transducer device.

The object is accomplished by the subject matter of the independent claims. Advantageous aspects of the present invention are defined in the dependent claims.

The invention provides an ultrasonic transducer device comprising a piezoelectric element, a damping device and a carrier element, wherein the piezoelectric element is mechanically coupled to the carrier element by means of the damping device. The ultrasonic transducer device comprises a heating device. The heating device comprises a temperature sensor element situated inside the damping device which is configured to measure a temperature of the damping device. The heating device comprises a heating element which is arranged inside the damping device and which is configured to heat the damping device by means of the heating current. A control circuit of the heating device is configured to supply the heating current to the heating element as a function of the measured temperature of the damping device and a predefined target temperature.

In other words, the ultrasonic transducer device comprises the damping device which is configured to attach the piezoelectric element to the carrier element. In order to provide a predefined damping behavior of the damping device, the ultrasonic transducer device comprises a heating device to ensure the predefined target temperature of the damping device during operation of the ultrasonic transducer device. To measure the temperature of the damping device, the heating device comprises the temperature sensor that is placed inside the damping device. The heating device comprises the control circuit which is configured to monitor the temperature of the damping device. The control circuit is configured to control the heating element of the damping device to set the temperature of the damping element to the predefined target temperature. To heat the damping element, the control circuit provides the heating current to the heating element. The heating element is enclosed or integrated inside the damping element. The invention has the advantage that the working temperature range of the ultrasonic transducer device is extended.

As an example, the piezoelectric element may be made of lead zirconate titanate or other piezoelectric ceramic materials. The piezoelectric element is attached to the carrier element by means of the damping device. In an example not forming part of the invention, the carrier element may be a housing of an electronic device or a surface of a pneumatic spring. During an excitation of the piezoelectric element by an applied voltage, the piezoelectric element may oscillate. To avoid an affection of the carrier element by the oscillations, the damping device may be made of a damping material that absorbs mechanical energy. The damping device may be made of polymers or silicon. The absorption of mechanical energy by the damping device may depend on the temperature of the damping device. The damping coefficient of the damping device may decrease when the temperature of the damping device is outside the working temperature range of the material. As an example, the oscillation of the piezoelectric element may propagate through the damping device when the temperature is below the working temperature. To heat the damping device to the predefined target temperature inside the working temperature range, the ultrasonic transducer device comprises the heating device. The heating device comprises a temperature sensor element which is placed inside the damping device. The temperature sensor element is configured to measure the temperature of the damping device. The temperature sensor element is connected to the control circuit of the heating device. The control circuit may comprise a microcontroller and is configured to control the temperature of the damping device. When the temperature of the damping device is below a predefined temperature range, the heating control circuit may supply the heating current to the heating element of the heating device. The heating element may be a metallic wire situated inside the damping device.

The invention also comprises embodiments that provide additional technical advantages.

According to a further embodiment of the invention, the damping device is made of an elastomeric compound. In other words, the damping device comprises an elastic polymer. The embodiment has the advantage that the damping device comprises a material with a higher damping ratio than other common materials. As an example, the damping device may comprise silicones, rubber or fluoroelastomers.

According to a further embodiment of the invention, the temperature sensor comprises a thermistor. In other words, the temperature sensor may comprise a thermally sensitive resistor. The embodiment has the advantage that the temperature sensor is made of a low priced and precise element. As an example, the temperature sensor may comprise a negative temperature coefficient thermistor or a positive temperature coefficient thermistor.

According to a further embodiment of the invention, the heating device comprises a heating wire. In other words, a metal wire is placed inside the damping device to heat the damping device by means of Joule heating. The embodiment has the advantage that the heating wire can heat large parts of the volume of the damping device. As an example, the heating wire may be made of copper or iron and may have a diameter of some micrometers. The wire may be loose to prevent a rupture during oscillation.

According to a further embodiment of the invention, the heating device comprises a coiled heating element. In other words, the heating device comprises a heating wire with a coil structure. The embodiment has the advantage that the heating wire is arranged in a structure with a high heating efficiency. As an example, the heating wire may be arranged in a coil structure inside the damping element.

According to a further embodiment of the invention, the control circuit is configured to set the heating current by means of a pulse width modulation of the heating current. In other words, the heating current does not have a constant current but sections with or without a current. The embodiment has the advantage that the control circuit comprises simple electronics to set the heating current. As an example, the heating current may be modulated by means of a pulse width modulation wherein the heating current comprises sections with or without a current.

The carrier element is a printed circuit board. In other words, the damping device is placed on a printed circuit board. The embodiment has the advantage that the ultrasonic transducer device is placed close to electronics controlling the piezoelectric element. As an example, the ultrasonic transducer device may be placed on a printed circuit board comprising electronics to control the ultrasonic transducer device.

The invention provides an air suspension device comprising the ultrasonic transducer device. In other words, the ultrasonic transducer device may be placed inside a pneumatic spring to measure a distance between two elements of the pneumatic spring.

The invention provides a method for controlling an ultrasonic transducer device. The ultrasonic transducer device comprises a piezoelectric element, a damping device and a carrier element wherein the piezoelectric element is mechanically coupled to the carrier element by means of the damping device. The method comprises the steps of measuring a temperature of the damping device by a temperature sensor element situated inside the damping device. In a next step, a heating current is supplied to a heating element situated inside the damping device as a function of the measured temperature of the damping device and a predefined target temperature by a control circuit. The damping device is heated by means of a heating current by the heating element.

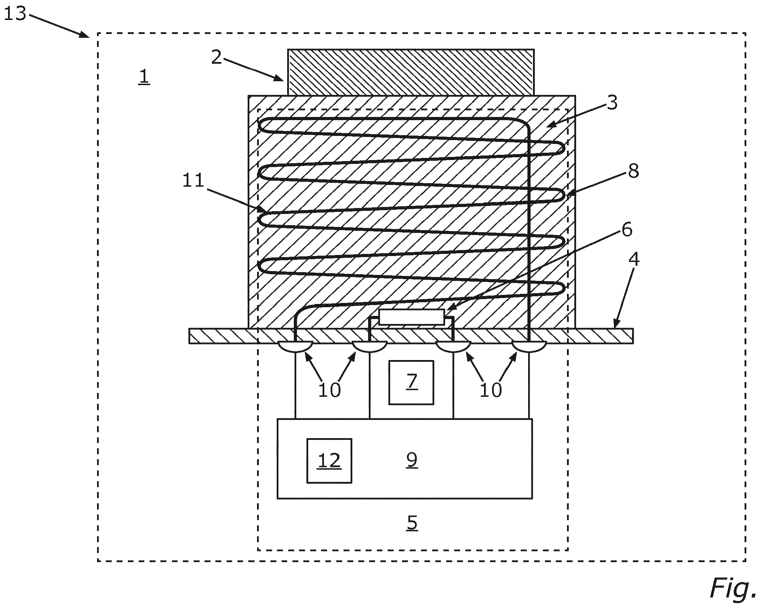

In the following an exemplary implementation of the invention is described. The figure shows:
- Fig.: a schematic illustration of an embodiment of the ultrasonic transducer device.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figure elements that provide the same function are marked with identical reference signs.

The Fig. shows an ultrasonic transducer device 1. The ultrasonic transducer device 1 might be part of an air suspension device 13. The ultrasonic transducer device 1 may be configured to determine a distance between two objects by measuring a time of flight of a sound wave. To send the sound wave, the ultrasonic transducer device 1 comprises the piezoelectric element 2. The piezoelectric element 2 may be configured to oscillate, when it is excited by an amplified voltage. The piezoelectric element 2 may transmit the sound signal in an ultrasonic frequency range.

The piezoelectric element 2 may be configured to provide a voltage, when it receives an echo of the sound signal. To prevent an excitation of the environment of the ultrasonic transducer device 1, the piezoelectric element 2 is placed on the damping device 3 which is coupled to the carrier element 4. The carrier element 4 is a printed circuit board comprising electronics to provide a voltage to the piezoelectric element 2 and to receive a voltage of the piezoelectric element 2.

The damping device 3 may consist of or contain an elastomeric compound wherein a stiffness of the elastomeric compound may depend on a temperature 7 of the damping device 3. To measure the temperature 7 of the damping device 3, the heating device 5 comprises the temperature sensor element 6 which may be designed as a thermistor placed inside the damping device 3. The heating device 5 comprises a heating element 8 situated inside the damping device 3. The heating element 8 may be a wire that may be arranged in a coil structure. The temperature sensor element 6 and the heating element 8 are connected to the control circuit 9 by electrical connections 10 embedded in the carrier element 4. The control circuit 9 may be configured to receive a signal indicating the temperature 7 of the carrier element 4 and to provide the heating current 11 for the heating element 8 to heat the damping device 3 to the predefined target temperature 12.

The elastomeric compounds behave differently at extreme temperatures (e.g. -40 deg. Celsius versus +90 deg. Celsius). The ones that have good performance at low temperatures show degraded performance at high temperatures and vice versa.

The ultrasonic transducer device 1 is composed of the piezoelectric element 2 used as an ultrasonic transducer and the damping device 3 containing the elastomeric compound. The proposed invention refers to the damping device 3 (elastomeric compound component) of the ultrasonic transducer device 1. Most elastomeric compounds have good performance either in low or high temperature. The invention proposes a method for extending the working temperature range of the elastomeric compound by adding the electrical heating element 8 and the necessary control circuit 9. The heating element 8 may be in the shape of a spiral and is embedded in the elastomeric compound in such a way that it does not interfere with other electrical connections used by the device. The heating element 8 will heat the elastomeric compound when the heating current 11 is passed through the heating spiral.

The dedicated electronic control circuit 9 generates a pulse width modulated signal which will pass a variable amount of heating current 11 through the heating spiral generating a proportional amount of heat. A heating power and a heating time is controlled by the electronic control circuit 9 based on the temperature elastomeric compound temperature 7. For this purpose the temperature sensor element 6 (e.g. thermistor) is embedded in the elastomeric compound and is used as control loop feedback by the electronic control circuit 9. If the measured elastomeric compound temperature 7 is lower than the minimum allowed operating temperature the electronic control circuit 9 will start to apply the heating current 11 through the heating spiral. Heating will stop when the elastomeric compound has reached the target temperature 12, which is the optimum operating temperature. Heating cycles are automatically controlled by the electronic control circuit 9. The heating device 5 improves ultrasonic transducer device 1 performance in low temperatures. Heating the elastomeric compound will bring it to specified operating temperature allowing it to have the correct hardness. If the elastomeric compound is out of spec (too hard or too soft) it will have adverse effects on the ultrasonic transducer performance A piezoelectric element 2 like a piezoceramic device vibrates when an electric current is passed through it. The ultrasonic transducer device 1 is an ultrasonic transducer element that is utilizing an elastomeric compound between the piezoelectric element 2 and the carrier element 4 electronic printed circuit board. If the elastomeric compound does not have the correct hardness (e.g. it is either too hard or too soft) the piezoelectric element 2 will not be able to function properly because the vibration will be attenuated. Temperature and aging have the most impact in elastomeric compound hardness. The invention is addressing the temperature effect on the elastomeric compound by proposing a method to mitigate the low temperature effect. Controlled heating of the elastomeric compound will bring it to correct operating conditions

Overall, the example shows how a device to improve the elastomeric compound performance at low temperatures by means of an electric heating element is provided by the invention as defined in the appended claims.

### Reference signs

- 1: ultrasonic transducer device
- 2: piezoelectric element
- 3: damping device
- 4: carrier element
- 5: heating device
- 6: temperature sensor element
- 7: temperature
- 8: heating element
- 9: control circuit
- 10: electrical connection
- 11: heating current
- 12: target temperature
- 13: air suspension device

## Claims

1. Ultrasonic transducer device (1) comprising a piezoelectric element (2), a damping device (3) and a carrier element (4), wherein the piezoelectric element (2) is mechanically coupled to the carrier element (4) by means of the damping device (3),
**characterized in that**
the carrier element (4) is a printed circuit board comprising electronics to control the ultrasonic transducer device,
the damping device (3) is placed on the printed circuit board and the piezoelectric element (2) is placed on the damping device (3), and **in that**
the ultrasonic transducer device (1) comprises a heating device (5), the heating device (5) comprising,
a temperature sensor element (6) situated inside the damping device (3) and configured to measure a temperature (7) of the damping device (3),
a heating element (8) situated inside the damping device (3) and configured to heat the damping device (3) by means of a heating current (11),
a control circuit (9) configured to supply the heating current (11) to the heating element (8) as a function of the measured temperature (7) of the damping device (3) and a predefined target temperature (12),
wherein the temperature sensor element (6) and the heating element (8) are connected to the control circuit (9) by electrical connections embedded in the printed circuit board.

2. Ultrasonic transducer device (1) according to claim 1,
**characterized in that**
the damping device (3) is made of an elastomeric compound.

3. Ultrasonic transducer device (1) as claimed in any preceding claim, **characterized in that** the temperature sensor element (6) comprises a thermistor.

4. Ultrasonic transducer device (1) as claimed in any preceding claim, **characterized in that** the heating element (8) comprises a heating wire.

5. Ultrasonic transducer device (1) as claimed in any preceding claim, **characterized in that** the heating element (8) comprises a coiled heating element.

6. Ultrasonic transducer device (1) as claimed in any preceding claim, **characterized in that** the control circuit (9) is configured to set the heating current (11) by means of a pulse width modulation of the heating current (11).

7. Air suspension device (13) comprising the ultrasonic transducer device (1) as claimed in any preceding claim.

8. Method for controlling the ultrasonic transducer device (1) as claimed in any of the preceding claims 1 to 6, the method comprising the steps of:
- measuring a temperature (7) of the damping device (3) by the temperature sensor element (6) situated inside the damping device (3),
- supplying a heating current (11) to the heating element (8) situated inside the damping device (3) as a function of the temperature (7) of the damping device (3) and a predefined target temperature (12) by the control circuit (9),
- heating the damping device (3) by means of the heating current (11), by the heating element (8).

## Patentansprüche

1. Ultraschallwandlervorrichtung (1), die ein piezoelektrisches Element (2), eine Dämpfungsvorrichtung (3) und ein Trägerelement (4) umfasst, wobei das piezoelektrische Element (2) mittels der Dämpfungsvorrichtung (3) an das Trägerelement (4) mechanisch gekoppelt ist,
**dadurch gekennzeichnet, dass**
das Trägerelement (4) eine Leiterplatte ist, die Elektronikbausteine umfasst, um die Ultraschallwandlervorrichtung zu steuern, wobei die Dämpfungsvorrichtung (3) auf der Leiterplatte positioniert ist und das piezoelektrische Element (2) auf der Dämpfungsvorrichtung (3) positioniert ist, und dass die Ultraschallwandlervorrichtung (1) eine Heizvorrichtung (5) umfasst, wobei die Heizvorrichtung (5) Folgendes umfasst:
ein Temperatursensorelement (6), das sich in der Dämpfungsvorrichtung (3) befindet, und konfiguriert ist,
eine Temperatur (7) der Dämpfungsvorrichtung (3) zu messen,
ein Heizelement (8), das sich in der Dämpfungsvorrichtung (3) befindet, und konfiguriert ist, die Dämpfungsvorrichtung (3) mittels eines Heizstroms (11) zu erhitzen,
eine Steuerschaltung (9), die konfiguriert ist, dem Heizelement (8) den Heizstrom (11) als eine Funktion der gemessenen Temperatur (7) der Dämpfungsvorrichtung (3) und einer vordefinierten Zieltemperatur (12) zuzuführen,
wobei das Temperatursensorelement (6) und das Heizelement (8) mit der Steuerschaltung (9) durch elektrische Verbindungen, die in die Leiterplatte eingebettet sind, verbunden sind.

2. Ultraschallwandlervorrichtung (1) nach Anspruch 1, **dadurch gekennzeichnet, dass** die Dämpfungsvorrichtung (3) aus einer Elastomerverbindung hergestellt ist.

3. Ultraschallwandlervorrichtung (1) nach einem vorhergehenden Anspruch, **dadurch gekennzeichnet, dass** das Temperatursensorelement (6) einen Thermistor umfasst.

4. Ultraschallwandlervorrichtung (1) nach einem vorhergehenden Anspruch, **dadurch gekennzeichnet, dass** das Heizelement (8) einen Heizdraht umfasst.

5. Ultraschallwandlervorrichtung (1) nach einem vorhergehenden Anspruch, **dadurch gekennzeichnet, dass** das Heizelement (8) ein gewendeltes Heizelement umfasst.

6. Ultraschallwandlervorrichtung (1) nach einem vorhergehenden Anspruch, **dadurch gekennzeichnet, dass** die Steuerschaltung (9) konfiguriert ist, den Heizstrom (11) mittels einer Pulsbreitenmodulation des Heizstromes (11) einzustellen.

7. Luftfederungsvorrichtung (13), die die Ultraschallwandlervorrichtung (1) nach einem vorhergehenden Anspruch umfasst.

8. Verfahren zum Steuern der Ultraschallwandlervorrichtung (1) nach einem vorhergehenden Ansprüche 1 bis 6, wobei das Verfahren die folgenden Schritte umfasst:
- Messen einer Temperatur (7) der Dämpfungsvorrichtung (3) durch das Temperatursensorelement (6), das sich in der Dämpfungsvorrichtung (3) befindet,
- Zuführen eines Heizstroms (11) zu dem Heizelement (8), das sich in der Dämpfungsvorrichtung (3) befindet, als eine Funktion der Temperatur (7) der Dämpfungsvorrichtung (3) und einer vordefinierten Zieltemperatur (12) durch die Steuerschaltung (9), und
- Erhitzen der Dämpfungsvorrichtung (3) mittels des Heizstromes (11) durch das Heizelement (8).

## Revendications

1. Dispositif transducteur à ultrasons (1) comprenant un élément piézoélectrique (2), un dispositif d'amortissement (3) et un élément porteur (4), où l'élément piézoélectrique (2) est couplé mécaniquement à l'élément porteur (4) au moyen du dispositif d'amortissement (3),
**caractérisé en ce que** l'élément porteur (4) est une carte de circuit imprimé comprenant une électronique pour commander le dispositif transducteur à ultrasons, le dispositif d'amortissement (3) est placé sur la carte de circuit imprimé et l'élément piézoélectrique (2) est placé sur le dispositif d'amortissement (3), et **en ce que** :
le dispositif transducteur à ultrasons (1) comprend un dispositif de chauffage (5), le dispositif de chauffage (5) comprenant :
un élément capteur de température (6) situé à l'intérieur du dispositif d'amortissement (3) et configuré pour mesurer une température (7) du dispositif d'amortissement (3),
un élément chauffant (8) situé à l'intérieur du dispositif d'amortissement (3) et configuré pour chauffer le dispositif d'amortissement (3) au moyen d'un courant de chauffage (11),
un circuit de commande (9) configuré pour fournir le courant de chauffage (11) à l'élément chauffant (8) en fonction de la température mesurée (7) du dispositif d'amortissement (3) et d'une température cible prédéfinie (12),
où l'élément capteur de température (6) et l'élément chauffant (8) sont reliés au circuit de commande (9) par des connexions électriques intégrées dans la carte de circuit imprimé.

2. Dispositif transducteur à ultrasons (1) selon la revendication 1, **caractérisé en ce que** :
le dispositif d'amortissement (3) est constitué d'un composé élastomère.

3. Dispositif transducteur à ultrasons (1) tel que revendiqué dans l'une quelconque des revendications précédentes, **caractérisé en ce que** :
l'élément capteur de température (6) comprend une thermistance.

4. Dispositif transducteur à ultrasons (1) tel que revendiqué dans l'une quelconque des revendications précédentes, **caractérisé en ce que** :
l'élément chauffant (8) comprend un fil chauffant.

5. Dispositif transducteur à ultrasons (1) tel que revendiqué dans l'une quelconque des revendications précédentes, **caractérisé en ce que** :
l'élément chauffant (8) comprend un élément chauffant enroulé.

6. Dispositif transducteur à ultrasons (1) tel que revendiqué dans l'une quelconque des revendications précédentes, **caractérisé en ce que** :
le circuit de commande (9) est configuré pour régler le courant de chauffage (11) au moyen d'une modulation de largeur d'impulsion du courant de chauffage (11).

7. Dispositif de suspension pneumatique (13) comprenant le dispositif transducteur à ultrasons (1) tel que revendiqué dans l'une quelconque des revendications précédentes.

8. Procédé de commande du dispositif transducteur à ultrasons (1) tel que revendiqué dans l'une quelconque des revendications précédentes 1 à 6, le procédé comprenant les étapes suivantes :
- mesurer une température (7) du dispositif d'amortissement (3) par l'élément capteur de température (6) situé à l'intérieur du dispositif d'amortissement (3),
- fournir un courant de chauffage (11) à l'élément chauffant (8) situé à l'intérieur du dispositif d'amortissement (3) en fonction de la température (7) du dispositif d'amortissement (3) et d'une température cible prédéfinie (12) par le circuit de commande (9),
- chauffer le dispositif d'amortissement (3) au moyen du courant de chauffage (11), par l'élément chauffant (8) .
